# EUROPEAN PATENT APPLICATION

(11) **EP 2 217 033 A1**
(43) Date of publication of application: **11.08.2010**
(21) Application number: 08783892.6
(22) Date of filing: 06.08.2008
(51) Int. Cl.: H04W 84/00

(54) **A METHOD AND A SYSTEM FOR NETWORK INFORMATION PROCESSING, A METHOD FOR NETWORK SEARCHING, A SERVER AND A TERMINAL**

(30) Priority: 09.01.2008 CN 200810055828
(71) Applicant: Huawei Technologies Co., Ltd., Longgang District, Shenzhen Guangdong 518129 (CN)
(72) Inventor: WU, Gengshi, Longgang District 518129 Shenzhen (CN)
(74) Representative: Kreuz, Georg Maria
(86) International application number: PCT/CN2008/071899
(87) International publication number: WO 2009/086751

(57) **Abstract**

The present invention discloses a network message processing method and system, a network searching method, a server and a terminal. The server creates a group access entry associated with a network message that includes information about new accessible frequencies and communications modes according to a preset grouping rule and delivers the group access entry to the terminal. The terminal receives the group access entry and stores the entry according to the preset grouping rule. When the terminal is powered on, the terminal searches for signals on frequencies and communications modes included in a specified group. The system includes the above terminal and server. With the present invention, the information about frequencies and communications modes accessible by a terminal is grouped and delivered. When the terminal is powered on, it searches for signals on only the frequencies and communications modes included in a specified group. Thus, the power-on delay of the terminal is shorter and the terminal can access a network in a faster and more efficient manner when the terminal is powered on.

## Description

### Field of the Invention

The present invention relates to communications technologies, and in particular, to a network message processing method and system, a network searching method, a server and a terminal.

### Background of the Invention

With the development of wireless communications technologies, more and more spectrum resources will be used in wireless or cellular communications. According to prediction, more than 1 GHz spectrum resources will be used in cellular communications. In different countries and regions, the frequencies used by different wireless communications operators and different wireless networks are just a part of the 1 GHz spectrum resources. User Equipment (UE), when initially powered on, does not know which country or region it is located, which operator network it can access, or the accessible frequency.

A common method in the prior art is to search for the frequencies used by all networks in all frequency ranges that can be used by the UE. For example, if the UE searches for frequencies at intervals of 200 kHz, the UE needs to perform 5000 searches for 1 GHz spectrum resources. Assume each search takes 10 ms. Then it takes the UE at least 50s to search in all the frequency ranges. This does not take into account the combinations of different wireless communications modes and frequency resources used by each frequency. The long search causes a long power-on delay.

In another method in the prior art, a UE records the previously used wireless communications mode and frequency information. For example, before the last power-off, the UE uses a 982.6 MHz GSM frequency. After the UE is powered on again, the UE measures and detects the frequency in precedence to determine whether it can still obtain network information on the frequency and mode. This method is applicable to scenarios where the UE does not move far in the power-off or power-on process. For a UE that roams in a large area, however, the method prolongs the total search time because it must first verify whether the last used frequency and mode are available.

### Summary of the Invention

According to different aspects of the present invention a network message processing method and system, a network searching method, a server and a terminal are provided, to resolve the defect of long power-on delay in the situation that there are a number of accessible frequencies and communications modes so as to reduce the delay in the network access process of a terminal when the terminal is powered on.

A network message processing method is disclosed according to a first aspect of the present invention. The method includes:
creating group access entry information associated with a network message that includes information about new accessible frequencies and communications modes according to a preset grouping rule; and
delivering the group access entry information.

A network searching method is disclosed according to a second aspect of the present invention. The method includes:
selecting an access search group from a group access table that includes group access entry information, where the group access entry information includes accessible frequencies and communications modes; and
searching for signals on frequencies and communications modes included in the selected access search group.

A server is disclosed according to a third aspect of the present invention. The server includes:
a grouping module, adapted to create group access entry information associated with a network message that includes information about new accessible frequencies and communications modes according to a preset grouping rule; and
a delivering module, adapted to deliver the group access entry information.

A terminal is disclosed according to a fourth aspect of the present invention. The terminal includes:
a selecting module, adapted to select an access search group from a group access table that includes group access entry information, where the group access entry information includes accessible frequencies and communications modes; and
a searching module, adapted to search for signals on frequencies and communications modes included in the selected access search group.

A network message processing system is disclosed according to a fifth aspect of the present invention. The system includes a server and a terminal, where:
the server is adapted to create group access entry information associated with a network message that includes information about new accessible frequencies and communications modes according to a preset grouping rule and deliver the created group access entry information to the terminal; and
the terminal is adapted to select an access search group from a group access table and search for signals on frequencies and communications modes included in the selected access search group, where the group access table includes group access entry information including accessible frequencies and communications modes.

With the network message processing method and system, the network searching method, the server and the terminal provided in the embodiments of the present invention, the information about frequencies and communications modes accessible by the terminal is grouped and delivered. When the terminal is powered on, it searches for signals on only the frequencies and communications modes included in a specified group. Thus, the power-on delay of the terminal is shorter and the terminal can access a network in a faster and more efficient manner when the terminal is powered on.

### Brief Description of the Drawings

FIG. 1 is a flowchart of a network message processing method in an embodiment of the present invention;
FIG. 2 is a flowchart of a network searching method in an embodiment of the present invention;
FIG. 3 shows a structure of a server in an embodiment of the present invention;
FIG. 4 shows a structure of a terminal in an embodiment of the present invention;
   and
FIG. 5 shows a structure of a network message processing system in an embodiment of the present invention.

### Detailed Description of the Invention

The technical solution of the present invention is described in detail with reference to specific embodiments and the accompanying drawings.

Embodiment of the network message processing method in the present invention

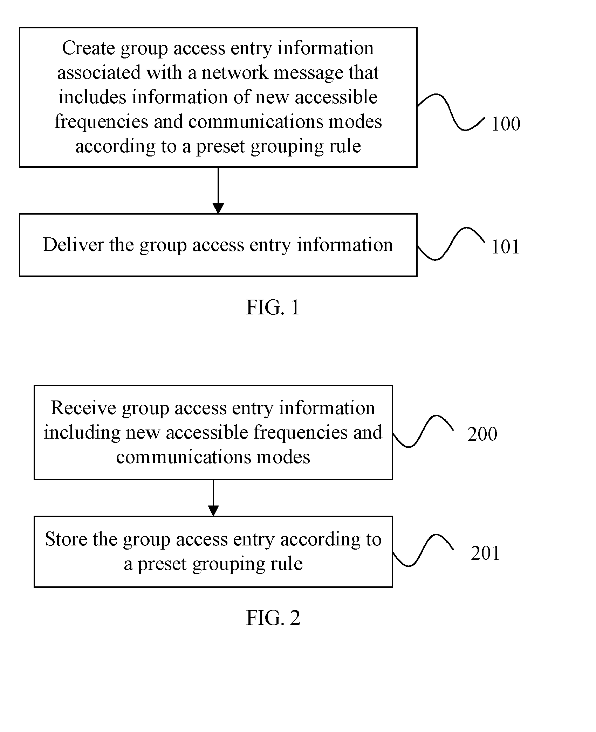

FIG. 1 is a flowchart of the network message processing method in an embodiment of the present invention. The method includes the following blocks:
Block 100: Create group access entry information associated with a network message that includes information about new accessible frequencies and communications modes according to a preset grouping rule.

When the contracted operator of a mobile terminal user has a broadcast network message about new accessible frequencies and wireless communications modes in different countries and regions, the broadcast network message is delivered by a network element such as a server or a base station to all contracted mobile terminals through broadcast. The new frequencies and wireless communications modes in different countries and regions in the message may be the result of a new wireless communications mode added by the contracted operator, or a roaming agreement between the contracted operator and an operator in another country or region, or a service agreement between the operator and the contracted terminal. For example, operator A adds an 894.6 MHz frequency for GSM broadcast messages or operator A signs a roaming agreement with operator B in another country or region (such as the US) while operator B uses the 895.6 MHz frequency for GSM broadcast messages and uses the 4.6 MHz bandwidth on the 2110.2 frequency for the broadcast messages in WCDMA mode. Therefore, operator A must deliver the information about the new frequency, bandwidth and wireless communications mode to terminals. Before the delivery, the information is processed according to a preset grouping rule to create group access entry information. A server that delivers the information about the new frequency, bandwidth and wireless communications mode stores a group access table. The table stores information about accessible frequencies and communications modes of all contracted terminals in different countries and regions in the form of groups. For example, if a group is created in the table with respect to a country, the group includes modes used in the country, accessible frequencies of each mode, and the bandwidth information about each frequency. Alternatively, the groups in the table may be based on other information, such as a region or an operator.

Block 101: Deliver the group access entry information.

After the server groups information about the new accessible frequencies, bandwidths, and wireless communications modes, the server delivers the group access entry that includes the information to terminals. For example, the server uses the group access entry to notify terminals that operator B uses the 895.6 MHz frequency for GSM broadcast messages and uses the 4.6 MHz bandwidth on the 2110.2 frequency for the broadcast messages in WCDMA mode and the information is grouped based on the US country. The group processing of the new information on the server is to notify terminals of the grouping basis. A terminal stores the information delivered by the server in an appropriate group accordingly.

The server may deliver the information to terminals immediately after the server processes the new information to create a group access entry, or the server may send new information to terminals periodically, or send new information to a terminal when receiving the request sent by the terminal. The new information is new group access entry information. The server may deliver the group access entry alone to terminals, or add the group access entry to the group access table and deliver the table to terminals. The table stores information about all terminal accessible frequencies, bandwidths and wireless communications modes that is grouped according to the grouping rule.

In the network message processing method provided in the embodiment of the present invention, the contracted operator of a mobile terminal sends the message to all contracted terminals when the contracted operator has a new frequency or wireless communications mode. The message is processed according to a grouping rule so that the terminal stores the information about the new frequency or wireless communications mode in the same grouping manner. When a terminal is powered on, the terminal searches for and camps on signals among a small part of all accessible frequencies and communications modes so that the power-on search delay is shorter.

Embodiment of the network searching method in the present invention

FIG. 2 is a flowchart of the network searching method in an embodiment of the present invention. The method includes the following blocks:
Block 200: Receive group access entry information including information about new accessible frequencies and communications modes.

After the contracted operator of a terminal adds a new wireless communications mode, or the operator signs a roaming agreement with an operator in another country or region, or the operator signs a service agreement with the contracted terminal, a server groups the information about the new frequency, bandwidth and wireless communications mode and sends the group access entry to the terminal. The terminal receives the group access entry from the server of the contracted operator. The group access entry includes information about new accessible frequencies and communications modes for the terminal.

Block 201: Store the group access entry according to a preset grouping rule.

When receiving the group access entry, the terminal stores the information about the new frequencies, bandwidth information, wireless communications modes, and range of usage in the entry according to a same grouping rule as that of the server. In particular, the terminal may store the group access entry in a group access table according to a preset grouping rule. The group access table stored by the terminal stores information about all frequencies and communications modes accessible by the terminal. The information is stored according to a certain grouping rule. The grouping may be based on a country and one group includes communications modes in the country, accessible frequencies of each mode and the bandwidth information about each frequency. The groups in the table may be based on other information, such as a region or an operator. For example, after the terminal receives a broadcast message indicating that an operator uses the 895.6 MHz frequency in China for GSM broadcast messages, the terminal knows that the message is to be stored in a group based on the country "China" according to the grouping rule of the entry. The terminal stores the information about the new frequency and communications mode in the "China" group in its group access table.

After the terminal is powered off and then powered on again, the terminal first determines on which frequency and communications mode in which group in the group access table it will search for network signals. The determination of a group may be selecting an access search group in the group access table according to initialization settings, which means, the terminal searches in the default group. Alternatively, the terminal may obtain the geographic position of the terminal automatically via the initialization of a positioning function. For example, the terminal knows that it is currently in the US territory from the Global Positioning System (GPS) after power-on and the terminal will search for signals on the accessible frequencies and communications modes in the "US" group in the group access table. The determination of a group may also be completed through user selection. In particular, after the terminal is powered on, the terminal provides a user interface on which the user selects the group range for signal searching. For example, the user is currently in the US and selects the "US" group in the group access table. The terminal will then search for signals on the accessible channels and communications modes in the "US" group. Optionally, the terminal may search for signals in another group according to a grouping rule, for example, searching in an operator group. In the search process, the terminal first searches a strongest signal frequency of one mode in the selected group and verifies whether it can camp on the frequency. If it cannot camp on the frequency, the terminal searches the strongest frequency of another mode and verifies whether it can camp on the frequency. Only the frequency bandwidth and wireless communications modes indicated in the information stored in the terminal are searched and therefore the search and verification are much shorter.

The following gives examples of the delivery and reception of a network message. For example, operator A installs a frequency information server in the network to provide the GSM mode and frequency information used by operator B with whom operator A has signed a roaming agreement in country C. The server delivers the information about the new frequency or wireless communications mode or a user accesses the server to obtain the information. When the user roams to country C and powers on a mobile terminal, the user instructs the mobile terminal to search GSM frequencies in country C through a man-machine interface. The terminal will search only frequencies and modes stored in the appropriate group. Thus, the appropriate frequency is found and camped on quickly. For another example, operator A installs a frequency information server in the network to provide GSM, WCDMA, and LTE modes and frequency information used by all operators in region I with whom operator A has signed a roaming agreement. A user accesses the server to obtain the information. When the user roams to region I and powers on the mobile terminal, the user instructs the mobile terminal to search frequencies of all modes of all operators in region I through a man-machine interface. The terminal will search only frequencies and modes stored in the appropriate group. Thus, the appropriate frequency is found and camped on quickly.

In the embodiment of the present invention, the information about frequencies and communications modes accessible by a terminal is grouped and delivered. When the terminal is powered on, it searches for signals on only the frequencies and communications modes included in a specified group. Thus, the power-on delay of the terminal is shorter and the terminal can access a network in a faster and more efficient manner when the terminal is powered on.

It is understandable to those skilled in the art that all or part of the steps of the foregoing embodiments can be implemented by hardware following instructions of programs. The programs may be stored in a computer readable storage medium. When the programs are executed, the steps of the foregoing embodiments are executed, and the storage medium may be any medium that can store program codes such as a Read-Only Memory (ROM), a Random Access Memory (RAM), a magnetic disk and a compact disk.

Embodiment of the server in the present invention

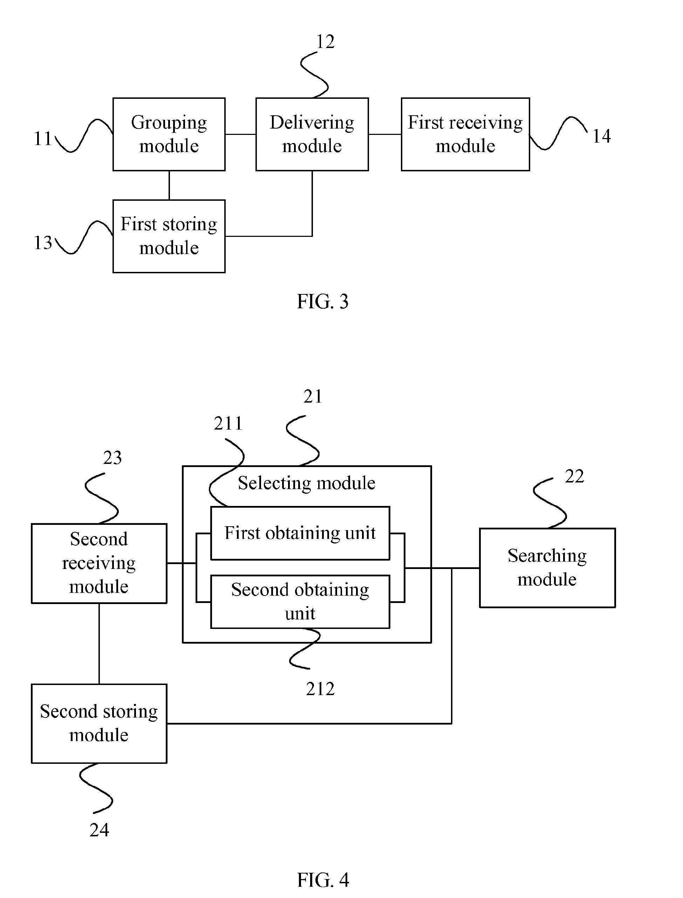

FIG. 3 shows a structure of the server in an embodiment of the present invention. The server includes a grouping module 11 and a delivering module 12. The grouping module 11 is adapted to create group access entry information associated with a network message that includes information about new accessible frequencies and communications modes according to a preset grouping rule. The delivering module 12 is adapted to deliver the group access entry information. When there is new terminal accessible frequency and mode information as a result of a new wireless communications mode added by the contracted operator of a terminal, or a roaming agreement between the contracted operator and an operator in another country or region, or a service agreement between the operator and the contracted terminal, the grouping module 11 groups the information about new frequencies, bandwidths, and communications modes to create a group access entry associated with the new information; the delivering module 12 delivers the group access entry or the group access table to the contracted terminal of the server.

The server may further include a first storing module 13, adapted to store the group access table that includes the group access entry information. After the grouping module 11 creates the group access entry and adds the group access entry to the group access table and the first storing module 13 stores the group access table. The server may further include a first receiving module 14, adapted to receive a request for the group access table from a terminal. When the first receiving module 14 of the server receives a new information request from a terminal, the delivering module 12 delivers the group access entry to the requesting terminal.

The server provided in the embodiment of the present invention groups the new information and delivers the information to the terminal so that the terminal stores the accessible frequencies and communications modes in a same grouping manner. When the terminal searches for network signals, the terminal searches for signals on only the accessible frequencies and communications modes in the selected group and therefore the search delay is shorter.

Embodiment of the terminal in the present invention

FIG. 4 shows a structure of the terminal in an embodiment of the present invention. The terminal includes a selecting module 21 and a searching module 22. The selecting module 21 is adapted to select an access search group from the group access table; the searching module 22 is adapted to search for signals on the frequencies and communications modes in the access search group selected by the selecting module 21.

When the terminal is restarted and starts a network search, the selecting module 21 of the terminal looks up an access search group in the group access table according to initialization information or user input. The group access table stores group access entry information including accessible frequencies and communications modes. After the selecting module 21 selects the appropriate access search group, the searching module 22 searches for signals on the frequencies and communications modes in the selected access search group to find an access network.

Further, the selecting module 21 includes a first obtaining unit 211 and a second obtaining unit 212. The first obtaining unit 211 is adapted to select an access search group from the group access table according to initialization information. The second obtaining unit 212 is adapted to select an access search group from the group access table according to the received user input information.

The terminal provided in the embodiment of the present invention also includes a second receiving module 23, adapted to receive group access entry information; and a second storing module 24, adapted to store the received group access entry information in an appropriate group in the group access table according to a preset grouping rule. After the second receiving module 23 receives a group access entry that includes information about new accessible frequencies and communications modes from a server, the second receiving module 23 sends the group access entry to the second storing module 24. The second storing module 24 adds the group access entry to the appropriate group in the group access table stored in the second storing module 24 according to the preset grouping rule. When the terminal is powered on again, the selecting module 21 selects a qualified access search group in the second storing module 24.

The contracted operator of the terminal notifies the terminal of all possibly accessible frequencies for the terminal and the modes and bandwidths on the frequencies. The terminal stores the information in a non-volatile memory, such as a Subscriber Identity Module (SIM) or a Flash memory. The terminal stores the information about all accessible frequencies and communications modes in groups. When the terminal is powered on, it searches for signals on only the frequencies and communications modes included in a specified group. Thus, the power-on delay of the terminal is shorter and the terminal can access a network in a faster and more efficient manner when the terminal is powered on.

Embodiment of the network message processing system in the present invention

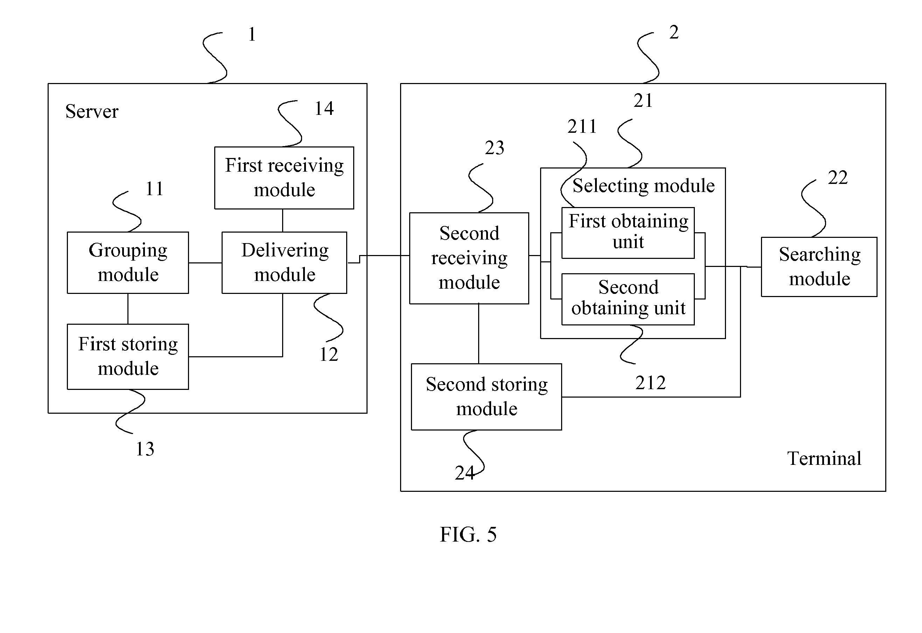

FIG. 5 shows a structure of the network message processing system in an embodiment of the present invention. The system includes a server 1 and a terminal 2. The server 1 includes a grouping module 11 and a delivering module 12. The grouping module 11 is adapted to create group access entry information associated with a network message that includes information about new accessible frequencies and communications modes according to a preset grouping rule. The delivering module 12 is adapted to deliver the group access entry information. When there is new terminal accessible frequency and mode information as a result of a new wireless communications mode added by the contracted operator of a terminal, or a roaming agreement between the contracted operator and an operator in another country or region, or a service agreement between the operator and the contracted terminal, the grouping module 11 groups the information about new frequencies, bandwidths, and communications modes to create a group access entry associated with the new information; the delivering module 12 delivers the group access entry to the contracted terminal of the server.

The server 1 may further include a first storing module 13, adapted to store the group access table that includes the group access entry information. After the grouping module 11 creates the group access entry, it adds the group access entry to the group access table and the first storing module 13 stores the group access table. The server 1 may further include a first receiving module 14, adapted to receive a request for the group access table from the terminal 2. When the first receiving module 14 of the server 1 receives a new information request from the terminal 2, the delivering module 12 delivers the group access entry to the terminal 2.

The terminal 2 includes a selecting module 21 and a searching module 22. The selecting module 21 is adapted to select an access search group from the group access table; the searching module 22 is adapted to search for signals on the frequencies and communications modes in the access search group selected by the selecting module 21.

When the terminal 2 is restarted and starts a network search, the selecting module 21 of the terminal 2 looks up an access search group in the group access table according to initialization information or user input. The group access table stores group access entry information including accessible frequencies and communications modes. After the selecting module 21 selects the appropriate access search group, the searching module 22 searches for signals on the frequencies and communications modes in the selected access search group to find an access network.

Further, the selecting module 21 includes a first obtaining unit 211 and a second obtaining unit 212. The first obtaining unit 211 is adapted to select an access search group from the group access table according to initialization information. The second obtaining unit 212 is adapted to select an access search group from the group access table according to the received user input information.

In the system provided in the embodiment of the present invention, the terminal 2 also includes a second receiving module 23, adapted to receive group access entry information; and a second storing module 24, adapted to store the received group access entry information in an appropriate group in the group access table according to a preset grouping rule. After the second receiving module 23 receives a group access entry that includes information about new accessible frequencies and communications modes from a server, the second receiving module 23 sends the group access entry to the second storing module 24. The second storing module 24 adds the entry to the appropriate group in the group access table stored in the second storing module 24 according to the preset grouping rule. When the terminal is powered on again, the selecting module 21 selects a qualified access search group in the second storing module 24.

The contracted operator of the terminal notifies the terminal of all possibly accessible frequencies for the terminal and the modes and bandwidths on the frequencies. The terminal stores the information in a non-volatile memory, such as a SIM or a Flash memory. The terminal stores all accessible frequencies and communications modes in groups. When the terminal is powered on, it searches for signals on only the frequencies and communications modes included in a specified group. Thus, the power-on delay of the terminal is shorter and the terminal can access a network in a faster and more efficient manner when the terminal is powered on.

Although the technical solution of the present invention has been described through exemplary embodiments, the invention is not limited to such embodiments. It is apparent that those skilled in the art can make various modifications and variations to the invention without departing from the spirit and scope of the invention. The invention is intended to cover the modifications and variations provided that they fall within the scope of protection defined by the claims or their equivalents.

## Claims

1. A network message processing method, comprising:
creating group access entry information associated with a network message that comprises information about new accessible frequencies and communications modes according to a preset grouping rule; and
delivering the group access entry information.

2. The method of claim 1, wherein the step of delivering the group access entry information comprises:
delivering the group access entry information immediately after creating the group access entry information; or
delivering the group access entry information periodically; or
delivering the group access entry information when receiving a request.

3. A network searching method, comprising:
selecting an access search group from a group access table that comprises group access entry information, wherein the group access entry information comprises accessible frequencies and communications modes; and
searching for signals on frequencies and communications modes comprised in the selected access search group.

4. The method of claim 3, further comprising:
receiving the group access entry information; and
storing the group access entry information according to a preset grouping rule.

5. The method of claim 3, wherein the step of selecting the access search group from the group access table comprises:
selecting the access search group from the group access table according to initialization information; or
selecting the access search group from the group access table according to received user input information.

6. A server, comprising:
a grouping module, adapted to create group access entry information associated with a network message that comprises information about new accessible frequencies and communications modes according to a preset grouping rule; and
a delivering module, adapted to deliver the group access entry information.

7. The server of claim 6, further comprising a first storing module, adapted to store a group access table that comprises the group access entry information.

8. The server of claim 6 or 7, further comprising a first receiving module, adapted to receive a group access table request from a terminal.

9. A terminal, comprising:
a selecting module, adapted to select an access search group from a group access table that comprises group access entry information, wherein the group access entry information comprises accessible frequencies and communications modes; and
a searching module, adapted to search for signals on frequencies and communications modes comprised in the selected access search group.

10. The terminal of claim 9, wherein the selecting module comprises:
a first obtaining unit, adapted to select the access search group from the group access table according to initialization information; and
a second obtaining unit, adapted to select the access search group from the group access table according to received user input information.

11. The terminal of claim 9 or 10, further comprising a second receiving module, adapted to receive the group access entry information.

12. The terminal of claim 11, further comprising a second storing module, adapted to store the received group access entry information in an appropriate group in the group access table according to a preset grouping rule.

13. A network message processing system, comprising a server and a terminal, wherein:
the server is adapted to create group access entry information associated with a network message that comprises information about new accessible frequencies and communications modes according to a preset grouping rule and deliver the created group access entry information to the terminal; and
the terminal is adapted to select an access search group from a group access table and search for signals on frequencies and communications modes comprised in the selected access search group, wherein the group access table comprises group access entry information that comprises accessible frequencies and communications modes.
